# EUROPÄISCHE PATENTANMELDUNG

(11) **EP 2 650 660 A1**
(43) Veröffentlichungstag der Anmeldung: **16.10.2013**
(21) Anmeldenummer: 12164091.6
(22) Anmeldetag: 13.04.2012
(51) Int. Cl.: G01G 19/03, G01G 19/52, G01V 3/10

(54) **Metallmelderband mit integrierter Wägezelle**

(71) Anmelder: Mettler-Toledo Garvens GmbH, 31180 Giesen (DE)
(72) Erfinder: Bettels, Dirk, 31177 Harsum (DE)
(74) Vertreter: Mettler-Toledo

(57) **Zusammenfassung**

Kombiniertes Wäge- und Metalldetektionssystem (1) welches mindestens einen Tragrahmen (4, 504, 604, 704A. 704B, 704C, 804A, 804B, 904A, 904B, 1004) zur Abstützung des Wäge- / Metalldetektionssystems (1) auf dem Untergrund aufweist und mindestens zwei an Auflagestellen (3A, 3B) des mindestens einen Tragrahmens (4, 504, 604, 704B, 704C, 804B, 904B, 904C, 1004) angeordnete den Wägewert bildende Wägezellen (6) aufweist und mit mindestens einer, für ein für den Betreib aufgestelltes Wäge- / Metalldetektionssystem (1), auf den Wägezellen (6) aufliegender Transporteinrichtung (7). Ferner weist das Wäge- / Metalldetektionssystem (1) einen Metalldetektor (2) aus, mit einer Öffnung (8), und dabei die Transporteinrichtung (7) durch die Öffnung (8) des Metalldetektors (2) hindurch geführt ist. Die mindestens zwei Wägezellen (6) sind in Bezug auf die Beförderungsrichtung der Transporteinrichtung (7) auf jeweils verschiedenen Seiten des Metalldetektors (2) angeordnet, vorzugsweise nahe dem in Beförderungsrichtung und dem entgegen der Beförderungsrichtung weisenden Ende der Transporteinrichtung (7). Der Metalldetektor (2) ist auf von den Auflagestellen (3B) der Wägezellen (6) verschiedenen Auflagestellen (3A) des mindestens einen Tragrahmens (4, 504, 604, 704A, 804A, 904A, 1004) abgestützt, so dass die Wägezellen (6) frei von der Vorlast des Metalldetektors (2) sind und das Verwiegen und das Erkennen von metallischer Verunreinigung auf derselben mindestens einen Transporteinrichtung (7) zeitnah erfolgen kann.

## Beschreibung

Die Erfindung betrifft ein kombiniertes Wäge- / Metalldetektionssystem, bei welchem eine Kontrollwaage mit einem Metalldetektor kombiniert wird.

In der Herstellung von pharmazeutischen oder kosmetischen Produkten, Lebensmitteln, Getränken sowie in der Logistik-, chemischen, Automobilzuliefer-, und der metallverarbeitenden Industrie sind Kontrollwaagen ein Schlüsselelement der Qualitätssicherung. Sie verbessern nicht nur die Ausschöpfung der vorhandenen Ressourcen sondern helfen auch nationale Verordnungen, Eichvorschriften und Industrienormen zu erfüllen. Ein effektives Kontrollwägesystem bietet Schutz gegen Produktfehler und senkt die Gesamtbetriebskosten.

Eine dynamische Kontrollwaage ist ein System, das Wägegüter verwiegt, während sie innerhalb einer Produktionslinie über die Waage geführt werden, die Wägegüter in vorgegebene Gewichtszonen klassiert und die Wägegüter entsprechend der Gewichtsklassierung sortiert oder ausschleust. Einsatzgebiete von Kontrollwaagen sind vielseitig und umfassen zum Beispiel:
- Prüfung auf Unter- bzw. Übergewicht von Produkten
- Einhaltung der gesetzlichen Bestimmungen für den Nettoinhalt von verpackten Gütern
- Reduzierung von Produktverschwendungen durch Verwendung der mittels der Kontrollwaage gewonnenen Gewichtswerte zur Einstellung der Füllmaschinen
- Klassierung von Produkten nach Gewicht
- Messung und Aufzeichnung der Leistung der Produktionsanlage bzw. -linie
- Stückzahl-Verifizierung anhand des Gewichts

Mit Kontrollwaagen werden 100% der Produkte einer Produktlinie gewogen. So werden dann auch die gesamten Produktionsdaten gesammelt für Produktzählung, Chargennachverfolgung oder für die Produktionsstatistik.

Ein Kontrollwägesystem besteht üblicherweise aus Zuführband, Wägeband, Abführband mit Sortiereinrichtung und Wägeterminal mit Benutzerschnittstelle. Das zwischen Zu- und Abführband gelegene Wägeband ist auf einer Wägezelle gelagert, welche das Produkt beim Überfahren des Wägebandes verwiegt. Die zwei am häufigsten verwendeten Wägetechnologien für Kontrollwaagen sind Wägezellen mit Dehnungsmessstreifen (DMS) oder nach dem Prinzip der elektromagnetischen Kraftkompensation (EMFR).

Ebenso wie Kontrollwaagen gehören auch Metalldetektoren zu den Schlüsselkomponenten für eine effektive Qualitätssicherung. Der Einsatz von Metalldetektoren wird von gewerblichen Nutzern für die Suche nach Produktverunreinigungen genutzt. So zum Beispiel für Bleikugeln in Fleisch, Drahtteile in Getreide, Späne aufgrund von Reparaturen an der Produktionsanlage oder Verunreinigungen aus der Produktverarbeitung.

Bei einem industriellen Metalldetektionssystem handelt es sich um ein hoch entwickeltes Gerät, mit dem metallische Fremdkörper erkannt und aussortiert werden können. Die Detektierbarkeit schliesst eisenhaltige Metalle, auch Edelstähle und nichteisenhaltige Metalle, wie Messing, Kupfer, Aluminium und Blei, ein. Ein typisches Metalldetektionssystem besteht aus folgenden vier Hauptkomponenten: Suchkopf, Transportsystem, Bedieneinheit und einem automatischen Ausschleussystem.

Heutige Suchköpfe von Metalldetektoren können mehrheitlich durch zwei Suchtechnologien unterschieden und kategorisiert werden. Eine erste Kategorie von Suchköpfen ist mit symmetrischen Spulen ausgerüstet. Drei genau parallel zueinander angeordnete Spulen werden auf einen nichtmetallischen Grundkörper gewickelt. Durch die mittlere der drei Spulen fliesst ein hochfrequenter elektrischer Strom, der ein magnetisches Feld erzeugt. Die benachbarten Spulen wirken als Empfänger und dabei wird durch die symmetrische Anordnung, für den Fall, dass keine Metallverunreinigungen den Detektor passieren, eine identische Spannung induziert. Passiert ein Produkt mit Metallverunreinigung die Spulenanordnung wird zunächst das Frequenzfeld der ersten Empfängerspule und anschliessend das der zweiten Empfängerspule gestört. Dies ändert die induzierte Spannung in den Empfängerspulen und das resultierende Signal kann zur Detektion der Metallverunreinigung verarbeitet werden.

Die zweite Kategorie von Suchköpfen kommt zur Untersuchung von Produkten mit Verpackungen, welche Alufolien enthalten, zur Anwendung. Das zu untersuchende Produkt kommt in ein starkes Magnetfeld und die Metallverunreinigung wird dabei magnetisiert. Diese Magnetisierung wird durch eine kleine Spannung in einer Empfängerspule detektiert. Gegenüber magnetischen Stoffen weisen Suchköpfe dieser Kategorie eine wesentlich höhere Detektionsempfindlichkeit auf als gegenüber nicht magnetischen Stoffen.

Damit der Metalldetektor nicht von elektrischen Signalen nahe gelegener metallischer Komponenten oder Maschinen gestört wird, ist der Suchkopf in einem Metallgehäuse, in der Regel aus Aluminium, abgeschirmt untergebracht. Das Metallgehäuse dient zudem der Verbesserung der Festigkeit und Starrheit und hat so einen wesentlichen Anteil an der Detektionsleistung des gesamten Metalldetektors.

Trotz Abschirmung mittels Metallgehäuses tritt ein Teil des hochfrequenten Magnetfeldes durch die Metalldetektoröffnung nach aussen und kann die Leistung des Metalldetektors beeinträchtigen, wenn dieses Magnetfeld dann von Metallgegenständen gestört wird. Um eine optimale Metalldetektion zu erzielen, dürfen sich in einem bestimmten Bereich um die Metalldetektoröffnung keine Metallgegenstände befinden. Dieser Bereich wird als metallfreie Zone MFZ bezeichnet. Für eine zuverlässige Detektion der Produkte sollte dieser Umstand berücksichtigt werden.

Die EP 0 536 288 beschreibt einen solchen Metalldetektor und die Lösungen zu den oben erwähnten Problemstellungen.

Zum dynamischen Verwiegen werden die Wägegüter bevorzugt auf einheitliche und wiederholbare Weise mit geeignetem, regelmässigem Abstand und mit korrekter Ausrichtung angeordnet. Dadurch kann die Kontrollwaage zur optimalen Plattform für die Integration von weiteren Inspektionseinrichtungen, wie zum Beispiel Metalldetektoren werden.

Kombinierte Systeme lassen sich komfortabler installieren und bedienen. Ausserdem ist ein solches System im Allgemeinen kostengünstiger als beide separat anzuschaffen und sie dann zusammen in die Produktionsstrasse zu integrieren. Dank einer gemeinsamen Einstellung der Wägeartikelparameter an einer Bedienoberfläche für beide Teilsysteme können Bedienungsfehler reduziert und Artikelwechsel schneller durchgeführt werden. Ausserdem fallen Kosten für Bedienerschulungen, Instandhaltung und Reinigung niedriger aus.

Im Stand der Technik ist bekannt, dass Kontrollwaagen und Metalldetektionsgeräte voneinander getrennt und in einer Beförderungsrichtung hintereinander eingesetzt werden. Zum Beispiel zeigt die US 2007 0 207 242 ein Qualitätskontrollsystem bestehend aus einer Fremdkörper-Detektionseinheit und einem Wägesystem. Beide Einrichtungen des Qualitätskontrollsystems besitzen ein separates Transportband und sind voneinander getrennt in der Anlage angeordnet. Eine Bedienungseinheit steuert dabei beide Anlageneinheiten, was ein grosser Vorteil für den Benutzer darstellt. Auch ist die Aussortiereinrichtung nur einmal vorhanden und scheidet Produkte, welche nicht die Vorgabekriterien der Qualitätssicherung der jeweiligen Anlage erfüllen, aus. Diese Vorgabekriterien können Gewichtstoleranzen oder Metallverunreinigungen beinhalten. Ebenfalls getrennte Ausführungen sind bekannt aus JP 2009 109 346 und JP 11 183 240. Ein grosser Nachteil der getrennten Ausführung ist die lange Transportstrecke durch beide Einrichtungen und damit verbunden der grosse Flächenbedarf am Einbauort.

Die JP 4 052 521 offenbart ebenfalls einen Metalldetektor, eine Wägezelle und ein Transportband. Dabei sind der Metalldetektor und das Transportband auf demselben Tragrahmen montiert und liegen gemeinsam auf der Wägezelle auf, welche sich wiederum auf einem Grundrahmen auf dem Untergrund aufstützt.

Gemäss EP 0536 288 ist ein Metalldetektor ausgestattet mit einer magnetfeldgenerierenden Spule, die meist aus Kupfer besteht und mitsamt dem Metallgehäuse viel Gewicht auf die Wägezelle bringt. Diese sogenannte Vorlast wirkt sich negativ auf die Genauigkeit von Messresultaten aus, und die Wägezelle muss inklusive dem Gewicht des Metalldetektors dimensioniert werden. Die Vorlast, unter Fachleuten Tara genannt, ist derjenige Teil eines Wägeguts, welcher nicht Gegenstand der Wägung ist, von der eigentlichen Last aber nicht getrennt werden kann. Das heisst es ist nur bis zu einem gewissen minimalen Gewicht des Kontrollgutes möglich zu messen beziehungsweise das Gewicht zu bestimmen.

Die Aufgabe der vorliegenden Erfindung besteht darin den Raumbedarf eines kombinierten Wäge- / Metalldetektionssystem zu minimieren. Zudem sollen optimale Messvoraussetzungen für die Wägezellen der Kontrollwaage geschaffen werden, damit zum Einen die Genauigkeit der Verwiegungen und zum anderen die Auslegung der Wägezelle optimiert werden.

Diese Aufgabe wird erfindungsgemäss mit einem kombinierten Wäge- / Metalldetektionssystem welches mindestens einen Tragrahmen zur Abstützung des Wäge- / Metalldetektionssystems auf dem Untergrund aufweist und mindestens zwei an Auflagestellen des mindestens einen Tragrahmens angeordnete den Wägewert bildende Wägezellen gelöst und mit mindestens einer, für ein für den Betreib aufgestelltes Wäge- / Metalldetektionssystem, auf den Wägezellen aufliegender Transporteinrichtung. Ferner weist das Wäge- / Metalldetektionssystem einen Metalldetektor aus, mit einer Öffnung, und dabei die Transporteinrichtung durch die Öffnung des Metalldetektors hindurch geführt ist. Die mindestens zwei Wägezellen sind in Bezug auf die Beförderungsrichtung der Transporteinrichtung auf jeweils verschiedenen Seiten des Metalldetektors angeordnet, vorzugsweise nahe dem in Beförderungsrichtung und dem entgegen der Beförderungsrichtung weisenden Ende der Transporteinrichtung. Der Metalldetektor ist auf von den Auflagestellen der Wägezellen verschiedenen Auflagestellen des mindestens einen Tragrahmens abgestützt, so dass die Wägezellen (6) frei von der Vorlast des Metalldetektors (2) sind und das Verwiegen und das Erkennen von metallischer Verunreinigung auf derselben mindestens einen Transporteinrichtung zeitnah erfolgen kann.

Mit der von der Abstützung der Transporteinrichtung separaten Abstützung des Metalldetektors auf einen Tragrahmen wird die Vorlast auf die Wägezellen wesentlich reduziert. Gegenüber den Lösungen aus dem Stand der Technik trägt das Gewicht des Metalldetektors nicht mehr zur Vorlast bei. Es entfällt das bisher stetige Gewicht des Metalldetektors auf die Wägezellen, was Massnahmen zur Gestaltung eines speziell leichten Metalldetektors überflüssig macht. Durch die niedrigere Vorlast können die vorherigen im Stand der Technik verwendeten Wägezellen durch mindestens zwei Wägezellen ersetzt werden, welche auf die neuen Vorlastverhältnisse abgestimmt sind. Dies erhöht die Auflösung der Kontrollwaage, oder anders gesagt die quantitative Angabe zur Fähigkeit, zwischen nahe beieinander liegenden Messwerten eindeutig zu unterscheiden.

Dadurch, dass das Transportband, getrennt vom Metalldetektor, über Wägezellen auf einem Tragrahmen aufliegt werden Vibrationen aus dessen Betrieb gedämpft an den Tragrahmen weitergegeben. Die Detektionsleistung des Metalldetektors wird gegenüber jenen Ausführungen gemäss dem Stand der Technik, wo Transportband und Metalldetektor gemeinsam über Wägezellen auf dem Tragrahmen abgestützt sind, erhöht.

Da das Transportband, welches zur Wägung der Gegenstände durch den Metalldetektor hindurchragt, kann die Verwiegung und die Detektion von Metallverunreinigungen des Wägeguts beim Durchlaufen der Transportstrecke des Transportbandes zeitgleich erfolgen. Die Gesamtlänge eines kombinierten Wäge- / Metalldetektionssystem wird so deutlich verkürzt.

Eine Weiterbildung der Erfindung sieht vor, dass Metalldetektor und Transporteinrichtung über Auflagestellen getrennt voneinander auf ein und demselben Tragrahmen abgestützt sind. Durch die gemeinsame Nutzung eines Tragrahmens wird der Flächenbedarf minimiert, und die Ausrichtung und Bodenbefestigung bei der Aufstellung am Verwendungsort vereinfacht.

Eine vorteilhafte Weiterbildung der Erfindung sieht vor, dass der Tragrahmen Auflagestellen, die für die Befestigung eines Metalldetektors bestimmt sind, aufweist, und mindestens zwei Auflagestellen, die für die Befestigung von Wägezellen bestimmt sind, aufweist und darauf die Transporteinrichtung abgestützt werden kann. Das Wägesystem und das Metalldetektionssystem sind getrennt voneinander auf jeweils eigenen Auflagestellen auf demselben Tragrahmen abgestützt, der Metalldetektor zentral in der Mitte des Tragrahmens, und das Transportband auf mindestens zwei Wägezellen, die je vorzugsweise an dessen äusseren Enden angeordnet sind. Die getrennte Abstützung ermöglicht die Reduzierung der Vorlast auf die Wägezellen um das Gewicht des Metalldetektors. Die Verwendung und Anordnung von mindestens zwei Wägezellen bietet zusätzlich den Vorteil Kosten einzusparen indem weniger Wägezellen verbaut werden müssen, so zum Beispiel bei schmalen Transportbändern oder wenn der Gegenstand auf dem Transportband stets quer zur Beförderungsrichtung mittig ist, oder anders gesagt wenn die Eckenlast für die Wägezelle kein Problem darstellt.

Bei einer weiteren Ausführungsform der Erfindung ist der Metalldetektor über Auflagestellen auf einem ersten Tragrahmen, und die Transporteinrichtung über jeweils mindestens zwei Auflagestellen auf einem, vom ersten Tragrahmen getrennten, zweiten Tragrahmen, abgestützt. Das heisst, dass das Transportsystem einen Tragrahmen und der Metalldetektor ebenfalls einen Tragrahmen zur Abstützung auf dem Untergrund aufweist. Mit separaten Tragrahmen wird die Übertragung von Vibrationen des Bandantriebs an den Metalldetektor minimiert. Die Verwendung und Anordnung von mindestens zwei Wägezellen bietet zusätzlich den Vorteil Kosten einzusparen indem weniger Wägezellen verbaut werden müssen, so zum Beispiel bei schmalen Transportbändern oder wenn der Gegenstand auf dem Transportband stets quer zur Beförderungsrichtung mittig ist, oder anders gesagt wenn die Einleitung eines Moments auf die Wägezellen ein tolerierbares Maximum nicht erreicht wird und so kein Problem darstellt.

Eine bevorzugte Ausführungsform der Erfindung sieht vor, dass der zweite Tragrahmen aus einem ersten Teiltragrahmen und einem zweiten Teiltragrahmen besteht, wobei beide Teiltragrahmen je mindestens eine Auflagestelle für eine Wägezelle aufweisen.

Weiter soll in einer Ausführungsform der Erfindung der Metalldetektor auf einem ersten Tragrahmen abgestützt sein und der zweite Tragrahmen zur Abstützung des Transportsystems am Gehäuse des Metalldetektors angeordnet sein. Die gesamte Einheit aus Metalldetektor und Transporteinrichtung ist so von den Auflagestellen des Metalldetektors am Tragrahmen entfern- und ersetzbar. Verbessert wird dadurch die Austauschbarkeit des kombinierten Wäge- / Metalldetektionssystems wenn die Produktionslinie auf ein Produkt umgestellt werden soll, welches wesentliche Unterschiede in Grösse und Gewicht hat.

In einer weiteren Ausführungsform ist der erste Teiltragrahmen und der zweite Teiltragrahmen durch eine Querverbindung miteinander verbunden.

Eine bevorzugte Ausführungsform der Erfindung zeichnet sich dadurch aus, dass mehrere Transporteinrichtungen parallel zueinander durch den Metalldetektor hindurch verlaufen. Mehrere parallel zueinander verlaufende Transporteinrichtungen durch den Metalldetektor erhöhen nicht nur den Durchsatz, sondern senken auch die Anschaffungskosten einer Anlage. Da die Herstellungskosten eines Metalldetektors mit kleineren Abmassen nicht auch proportional tiefer sind, entsteht ein Kostennachteil bei einem Wäge- / Metalldetektionssystem für kleine Wägegüter. Durch die Wahl eines grösser dimensionierten Metalldetektors und mehrerer Transportbänder durch denselben Metalldetektor hindurch lässt sich dieser Nachteil beheben.

Jede Transporteinrichtung kann dabei auf mindestens zwei Wägezellen abgestützt sein, so dass eine Wägung auf jeder Transporteinrichtung separat erfolgen kann. Die Metalldetektion kann zeitnah zur Wägung erfolgen wenn der Wägegegenstand auf der Transporteinrichtung den Metalldetektor passiert. Die Verwendung und Anordnung von mindestens zwei Wägezellen pro Transporteinrichtung bietet zusätzlich den Vorteil Kosten einzusparen indem weniger Wägezellen verbaut werden müssen, so zum Beispiel bei schmalen Transportbändern oder wenn der Gegenstand auf dem Transportband stets quer zur Beförderungsrichtung mittig ist, oder anders gesagt wenn die Eckenlast für die Wägezelle kein Problem darstellt.

Eine vorteilhafte Weiterbildung der Erfindung sieht vor, dass die Transporteinrichtung vermittels einer Dreipunktauflage auf drei Wägezellen aufliegt. Eine statisch bestimmte Abstützung, die kippfrei auf mindestens einem Tragrahmen steht, erhöht die Genauigkeit der Gewichtsbestimmung, zum Beispiel durch Minimierung von Eckenlastfehlern.

Bei einer bevorzugten Ausführungsform der Erfindung ist die Transporteinrichtung auf vier an jeder Ecke der Transporteinrichtung angeordneten Wägezellen aufliegend ausgestaltet. Bei breiten Transportbändern kann beispielsweise ein quer zur Beförderungsrichtung nicht mittig liegendes Wägegut durch Einleitung eines Moments auf die Wägezellen die Messung verfälschen. Durch die Anordnung von vier Wägezellen, in jeder Ecke des Transportbandes eine, kann diese Problematik weitestgehend eliminiert werden.

Eine besonders vorteilhafte Weiterbildung der Erfindung sieht vor, dass der Metalldetektor mittig zur Transporteinrichtung in Bezug auf die Beförderungsrichtung angeordnet ist Durch das zentrale Anordnen des Metalldetektors relativ zur Transporteinrichtung aufgrund der metallfreien Zone (MFZ) lässt sich dieses in Beförderungsrichtung minimal kurz gestalten. Da sich immer nur ein Produkt zur Wägung auf der Transporteinrichtung befinden darf um gewogen zu werden, hat dies den Vorteil, dass die Durchlaufzeit verringert wird, da die Wägegüter in näherem Abstand zueinander das Wäge- / Metalldetektionssystem durchlaufen, und sich so der Durchsatz steigert.

Eine andere vorteilhafte Weiterbildung der Erfindung sieht vor, dass ein der Wägung und Metalldetektion nachfolgendes Ausschleussystem dafür ausgebildet ist, diejenigen Gegenstände auszuschleusen, welche nicht den Vorgabekriterien betreffend Gewichtstoleranzen oder Metallverunreinigungsgehalt entsprechen. Es kann so gegenüber der getrennten Lösung ein Ausschleussystem eingespart werden.

Eine andere Weiterbildung der Erfindung sieht vor, dass die Transporteinrichtung mindestens einen Transporteinrichtungskörper und ein diesen Transporteinrichtungskörper umspannendes Band zur Beförderung von Gegenständen aufweist.

Eine bevorzugte Ausführungsform der Erfindung sieht vor, dass die Transporteinrichtung im unteren Bereich nahe den Ecken der Öffnung durch den Metalldetektor hindurch geführt ist. Denn in einem typischen Metalldetektor ist die Detektionsempfindlichkeit in der geometrischen Mitte der Öffnung am schwächsten und in den Randbereichen am höchsten.

Im Folgenden wird der Erfindungsgegenstand anhand von bevorzugten Ausführungsbeispielen, welche in den beiliegenden Zeichnung(en) dargestellt sind erläutert. Es zeigen:
- Fig. 1: ein kombiniertes Wäge- / Metalldetektionssystem in der Vorderansicht;
- Fig. 2: ein kombiniertes Wäge- / Metalldetektionssystem in einer Seitenansicht;
- Fig. 3: ein kombiniertes Wäge- / Metalldetektionssystem in isometrischer Ansicht;
- Fig. 4: einen Tragrahmen für ein kombiniertes Wäge- / Metalldetektionssystem mit vier Auflagestellen für das Transportband, in isometrischer Ansicht;
- Fig. 5: einen Tragrahmen für ein kombiniertes Wäge- / Metalldetektionssystem mit zwei Auflagestellen für das Transportband, in isometrischer Ansicht;
- Fig. 6: einen Tragrahmen für ein kombiniertes Wäge- / Metalldetektionssystem mit drei Auflagestellen für das Transportband, in isometrischer Ansicht;
- Fig. 7: ein kombiniertes Wäge- / Metalldetektionssystem mit vom Tragrahmen des Metalldetektors getrennten, zweiteiligen Tragrahmen der Transporteinheit, in der Vorderansicht;
- Fig. 8: ein kombiniertes Wäge- / Metalldetektionssystem mit vom Tragrahmen des Metalldetektors getrennten, einteiligen Tragrahmen der Transporteinheit, in der Vorderansicht;
- Fig. 9: ein kombiniertes Wäge- / Metalldetektionssystem mit am Gehäuse des Metalldetektors angebrachten, zweiteiligen Tragrahmen der Transporteinheit, in der Vorderansicht;
- Fig. 10: ein kombiniertes Wäge- / Metalldetektionssystem in isometrischer Ansicht mit schematischer Darstellung von zwei Transporteinrichtungen parallel zueinander durch den Metalldetektor hindurch;

Merkmale mit gleicher Funktion und ähnlicher Ausgestaltung sind im Folgenden Beschreib mit denselben Bezugszeichen versehen.

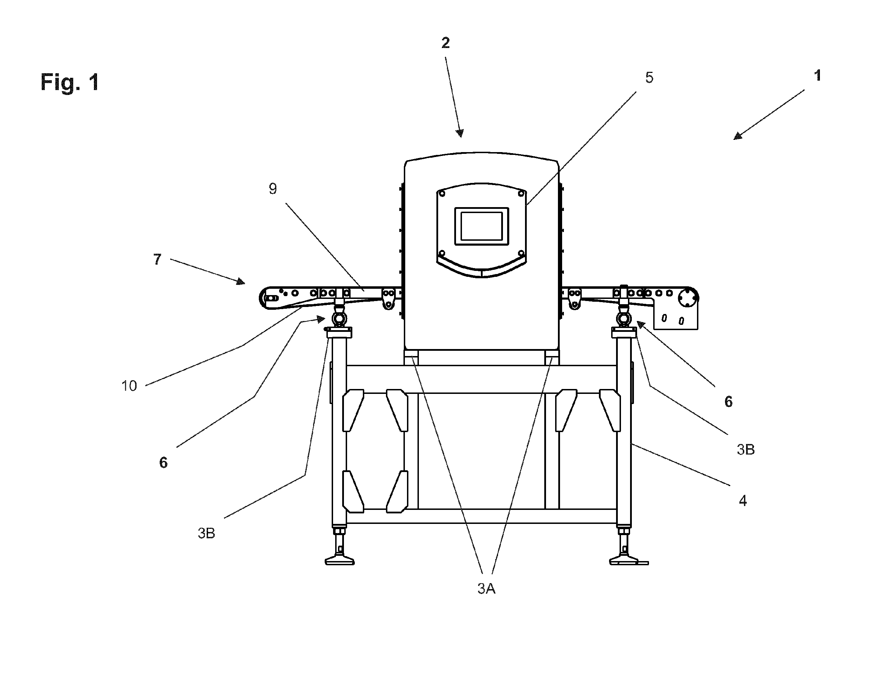

Figur 1 zeigt die Vorderansicht eines erfindungsgemässen kombinierten Wäge- / Metalldetektionssystem 1, wie sie ein Benutzer bei Bedienung in der Regel vor sich hat. Ein Metalldetektor 2 ist in der Regel über mindestens zwei Auflagestellen 3A direkt an einem Tragrahmen 4 angebracht und so auf dem Untergrund abgestützt. Zu beiden Seiten des Metalldetektors 2 befinden sich am Tragrahmen 4 insgesamt mindestens zwei Auflagestellen 3B für die Aufnahme von Wägezellen 6. Auf diesen Wägezellen 6 liegt die Transporteinrichtung 7 auf. Dabei ist der feststehende Parallelschenkel einer Wägezelle 6 mit dem Tragrahmen 4 verbunden und die Transporteinrichtung 7 mit dem beweglichen Parallelschenkel derselben Wägezelle 6. Die Transporteinrichtung 7 umfasst einen Transporteinrichtungskörper 9 mit Rollen nahe dem in Beförderungsrichtung und dem entgegen der Beförderungsrichtung weisenden Ende der Transporteinrichtung (7) und einem Band 10, das um zwei Rollen gespannt ist. Wenn die Rollen einen zu grossen Radius aufweisen wird dadurch der Abstand zwischen zwei aufeinander folgenden Bändern ebenfalls gross. Um einen zuverlässigen Übergang eines Gegenstandes auf das nachfolgende Transportband zu ermöglichen kann durch eine nicht angetriebene Zwischenrolle zusätzlich zu den Rollen, oder durch Messerkanten Abhilfe geschaffen werden. Bei Messerkanten wird das Band um eine starre Kante mit kleinem Radius umgelenkt und der Vortrieb des Bandes erfolgt über eine separate Antriebsrolle. Die Ausgestaltung der Transporteinrichtung ist jedoch nicht Gegenstand der Erfindung. Die Ausprägungen einer solchen Transporteinrichtung kann verschieden sein, sofern diese dem Zweck der Beförderung von Gegenständen durch den Metalldetektor 2 dient.

Während der Wägegegenstand die Transportstrecke auf der Transporteinrichtung 7 zurücklegt, wird für die Verwiegung das Summensignal aus den mindestens zwei Wägezellen 6 gebildet. Es erfolgt zeitnah zur Verwiegung die Detektion von Metallen im Metalldetektor 2. Ein Ausscheidesystem, hier nicht gezeigt, kann das Wägegut nach der Verwiegung und Kontrolle durch den Metalldetektor 2 von der Transporteinrichtung 7 entfernen, falls es nicht den Vorgabekriterien betreffend Gewichtstoleranzen oder Metallverunreinigungsgehalt entspricht.

Um eine optimale Metalldetektion zu erzielen, dürfen sich in einem bestimmten Bereich um die Öffnung 8 keine Metallgegenstände befinden. Dieser Bereich wird als metallfreie Zone MFZ bezeichnet. Die Grösse der metallfreien Zone MFZ ist abhängig von der Höhe der Öffnung 8, dem Detektortyp und der Betriebsempfindlichkeit des Metalldetektors 2. Feststehende Metallgegenstände können näher am Metalldetektor 2 positioniert sein als bewegliche Metallgegenstände, da diese einen geringeren Störeinfluss auf das Magnetfeld haben. Das Detektionsfeld ist jener Bereich innerhalb des Magnetfeldes des Metalldetektors 2, in welchem die kleinste, unerwünschte Metallverunreinigung gemessen und detektiert werden kann. Der gezeigte Metalldetektor 2 verfügt über ein nach beiden Seiten symmetrisches Detektionsfeld und ist hier zentral, beziehungsweise mittig zur Transporteinrichtung 7 in Bezug auf die Beförderungsrichtung aufgestellt um dieses in Beförderungsrichtung möglichst kurz halten zu können. Bei einem asymmetrischen Detektionsfeld würde man demnach die Position des Metalldetektors 2 gegenüber der Transporteinrichtung 7 dem Detektionsfeld anpassen, so dass die Transporteinrichtung 7 und das Detektionsfeld des Metalldetektors 2 in ihrer Ausdehnung in Beförderungsrichtung etwa deckungsgleich sind und/oder dass das kombinierte Wäge- / Metalldetektionssystem in Beförderungsrichtung möglichst kurz gehalten werden kann und/oder dass feststehende oder bewegliche Metallgegenstände nicht zu einer Minderung der Betriebsempfindlichkeit führen.

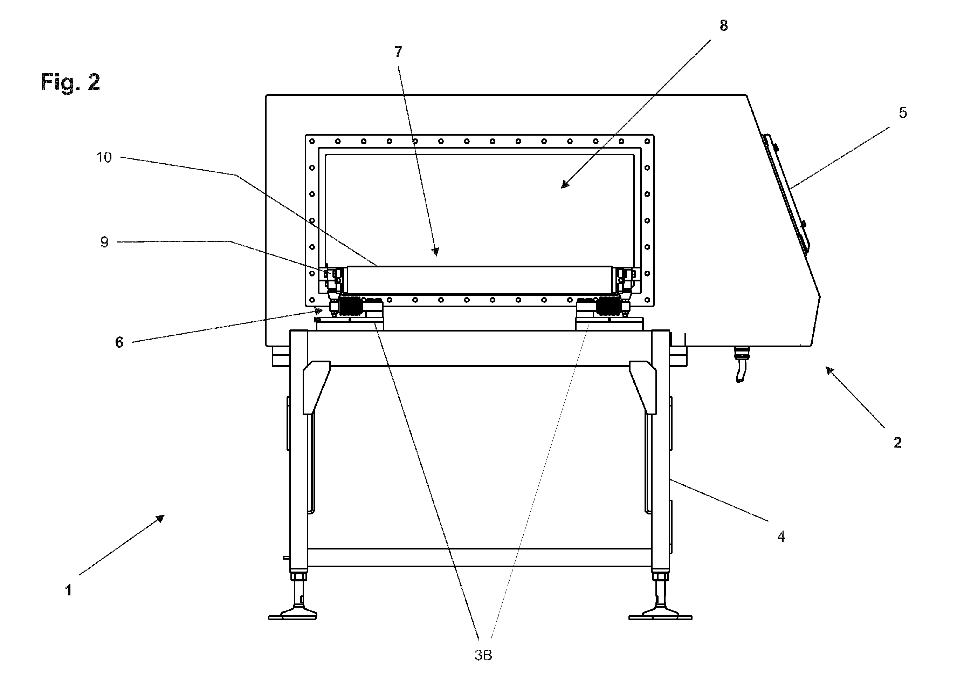

In Figur 2 ist in einer Seitenansicht die Öffnung 8 des Metalldetektors 2 zu erkennen, durch welche die Transporteinrichtung 7 geführt ist. Metalldetektoren 2 mit grosser Öffnung 8 weisen im Vergleich zu Metalldetektoren 2 mit einer kleinen Öffnung 8 eine geringere Detektionsempfindlichkeit auf. Sowohl die horizontale als auch die vertikale Ausdehnung der Öffnung 8 haben eine Auswirkung auf die Detektionsempfindlichkeit. In einem typischen Metalldetektor 2 ist die Detektionsempfindlichkeit in der geometrischen Mitte der Öffnung 8 am schwächsten, in den Randbereichen hingegen am höchsten. Deshalb ist die Transporteinrichtung 7 im unteren Bereich nahe den Ecken durch die Öffnung 8 geführt.

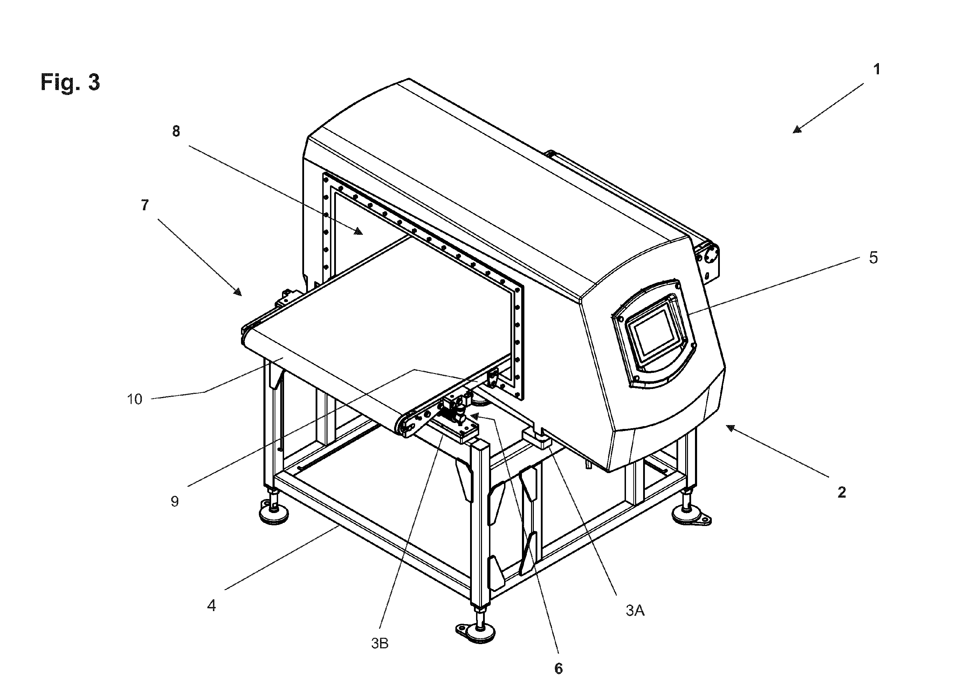

In der isometrischen Ansicht des Wäge- / Metalldetektionssystems 1 in Figur 3 ist an der rechten unteren Ecke der Öffnung 8 zu sehen, dass die Transporteinrichtung 7 und der Metalldetektor 2 keine Berührungsstellen haben sondern beide jeweils unabhängig voneinander über Auflagestellen 3A oder Auflagestellen 3B auf einem Tragrahmen 4 abgestützt sind. Somit wirken nur die Gewichtskraft des Wägeguts und die der Transporteinrichtung 7 auf die Wägezellen 6. Im Vergleich zu Vorrichtungen gemäss dem Stand der Technik, ermöglicht die damit erzielte geringere Vorlast den Einsatz von kleineren Wägezellen 6, welche eine höhere Auflösung des Messsignals liefern.

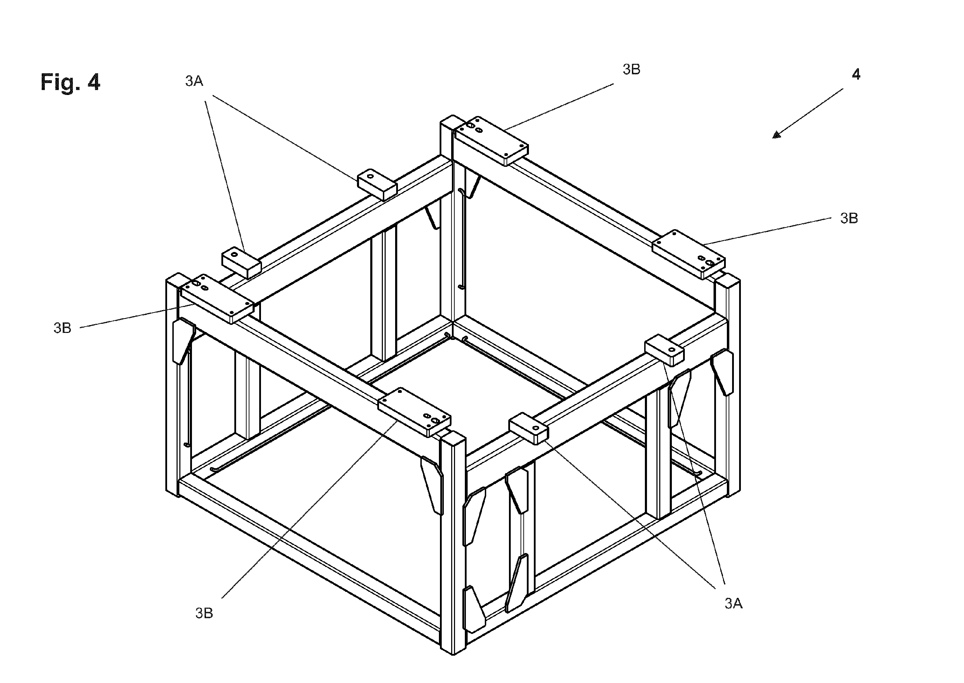

Der Tragrahmen 4 aus Figur 4 besitzt neben den vier Auflagestellen 3A für die Befestigung des Metalldetektors 2 auch vier weitere Auflagestellen 3B. An diesen werden die Wägezellen 6 angebracht und auf die selbigen wiederum die Transporteinrichtung 7 abgestützt. Bei einer relativ breiten Transporteinrichtung 7 ist es von Vorteil an allen Ecken des Tragrahmens 4 Wägezellen 6 anzubringen, da dann ein quer zur Beförderungsrichtung nicht mittig auf der Transporteinrichtung 7 gelegenes Wägegut keinen Messfehler verursachen kann. Ein solcher Fehler könnte beispielsweise durch eine Einleitung eines Moments auf die Wägezellen 6 entstehen.

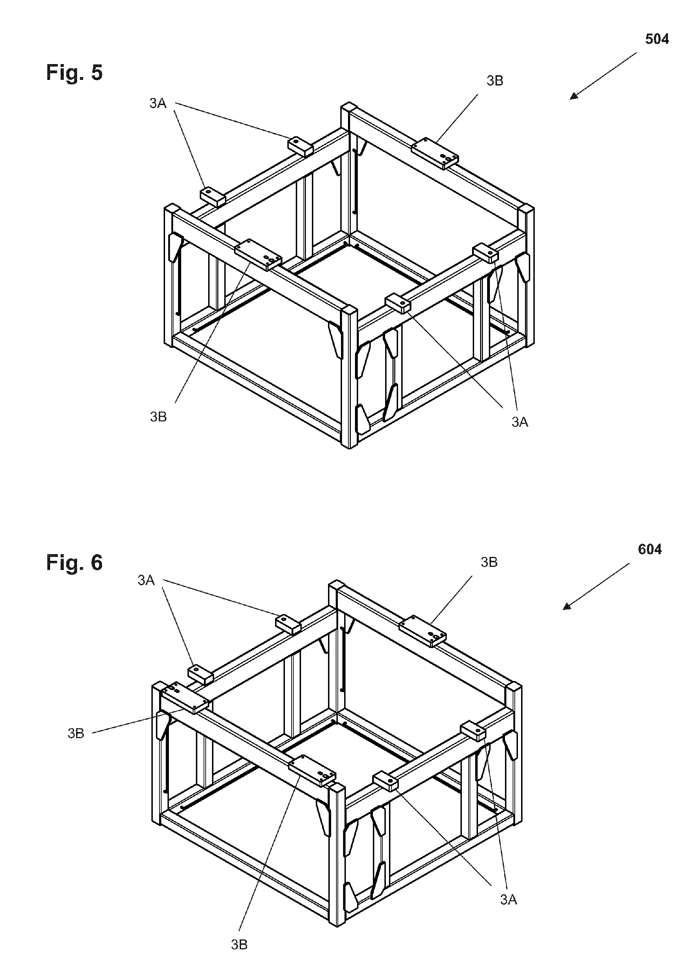

In Figur 5 und Figur 6 sind Tragrahmen 504, 604 mit jeweils anderer Anzahl an Auflagestellen 3B für die Wägezellen 6 gezeigt. In einer ersten Ausführung sind am Tragrahmen 504 zwei Auflagestellen 3B angebracht. Falls die Transporteinrichtung 7 relativ schmal ausfällt genügt es, lediglich auf beiden Seiten des Metalldetektors 2 je eine Auflagestelle 3B anzubringen. So wird auf eine breite Abstützung zugunsten einer günstigeren Ausführung verzichtet. In Figur 6 sind drei Auflagestellen 3B vorhanden, welche eine Dreipunktauflage bilden. Es entsteht eine statisch bestimmte Abstützung, die die Transporteinrichtung 7 kippfrei auf dem Tragrahmen 604 hält. So kann beispielsweise eine Wägezelle gespart werden.

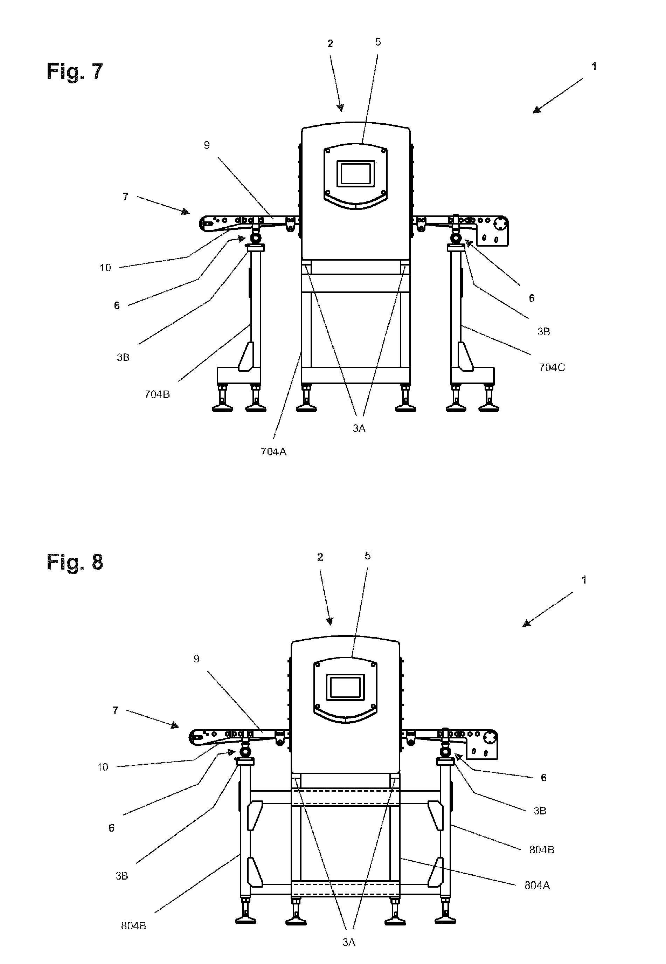

Weitere Ausführungsformen des Tragrahmens 4 sind in Figur 7 und Figur 8 gezeigt und zeichnen sich dadurch aus, dass dieser mindestens zweiteilig ist und entweder den Metalldetektor 2 oder die Transporteinrichtung 7 trägt. Der erste Tragrahmen 704A stützt den Metalldetektor 2 über die Auflagestellen 3A auf dem Untergrund ab. Die Transporteinrichtung 7 wird gestützt durch zwei weitere Teiltragrahmen 704B und 704C. Alle drei Tragrahmen 704A, 704B, 704C sind so ausgestaltet, dass sie gegenseitig nicht verbunden sind. Die beiden Abstützungen der Transporteinrichtung 7 in Figur 8 sind durch Querverbindungen 11 verbunden, welche zum Beispiel um den ersten Tragrahmen 804A des Metalldetektors 2 herumgeführt sind, und bilden so den zweiten Tragrahmen 804B zur Abstützung der Transporteinrichtung 7 auf dem Untergrund. Beide Ausführungen bieten den Vorteil, dass das Transportsystem 7 keine Schwingungen oder Vibrationen über einen gemeinsamen Tragrahmen an den Metalldetektor 2 weiter geben kann. Weitere Vorteile bieten diese Ausführungen spezifisch je nach Situation am Installationsort oder nach Betriebsanforderungen wie Auswechselbarkeit und einfache Wartung des Transportsystems 7.

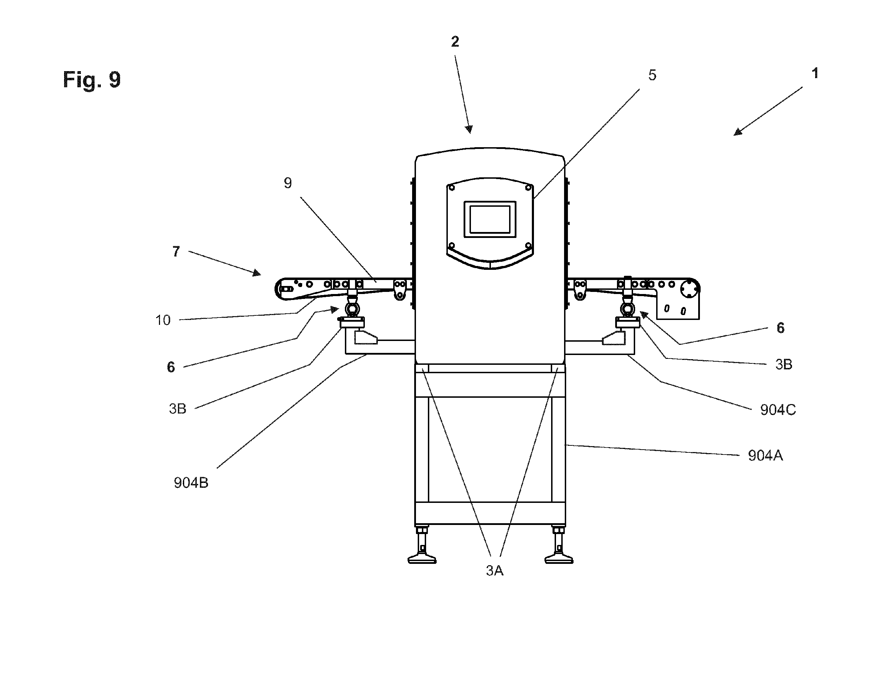

In Figur 9 ist die Transporteinrichtung 7 über Teiltragrahmen 904B und 904C direkt am Gehäuse des Metalldetektors 2 angeordnet. Der Metalldetektor 2 wiederum stützt sich über einen ersten Tragrahmen 904A auf dem Untergrund ab. Soll nun die Produktionslinie auf ein Produkt umgestellt werden, welches wesentliche Unterschiede in Grösse und Gewicht hat, kann der Metalldetektor 2 mitsamt der Transporteinrichtung 7 von den Auflagestellen 3A entfernt und ersetzt werden.

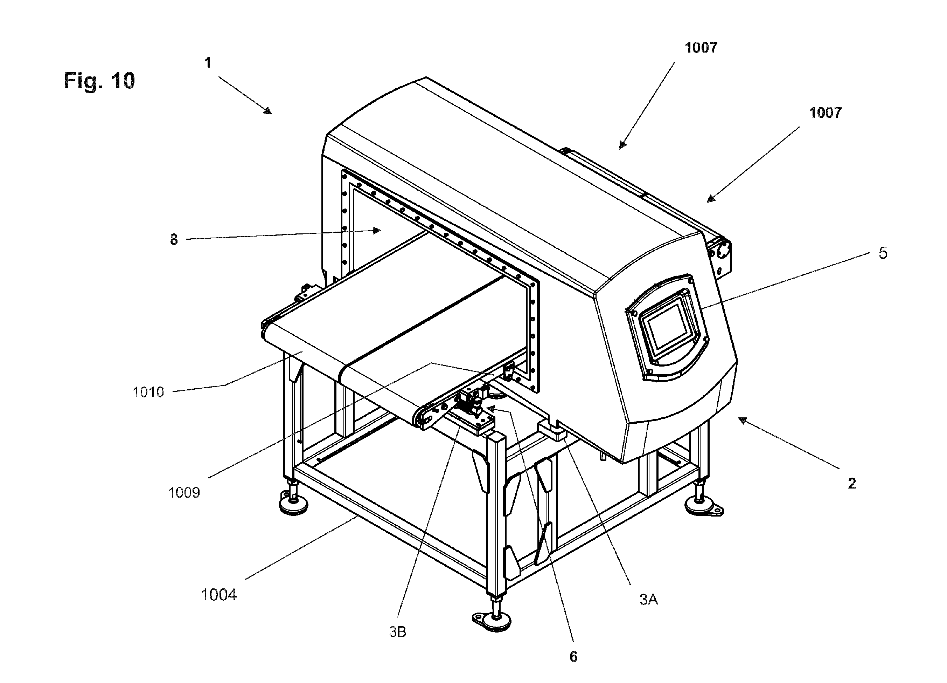

Die Figur 10 stellt schematisch dar wie die Anordnung von mehreren Transporteinrichtungen 1007 erfolgen kann. In der dargestellten Ausführungsvariante weist der Tragrahmen 1004 für jede Transporteinrichtung 1007 je zwei Auflagestellen 3B für die Wägezellen 6 auf. Darauf abgestützt und untereinander nicht verbunden ermöglichen die zwei Transporteinrichtungen 1007 ein paralleles Befördern und Wägen der Gegenstände beim Durchlaufen des Metalldetektors und die Erkennung von Metallverunreinigungen durch den Metalldetektor 2 erfolgt dabei zeitnah. Nicht dargestellt in der Figur 10 sind die nachfolgenden Ausschleussysteme, welche diejenigen Gegenstände aussortieren, welche nicht den Vorgabekriterien bezüglich Gewicht und Metallverunreinigung entsprechen. Da die Transporteinrichtungen 1007 unabhängig voneinander angetrieben werden ist es möglich mit unterschiedlichen Bandgeschwindigkeiten zu fahren. Denkbar ist dabei auch die Belegung der Transporteinrichtungen 1007 mit jeweils verschiedenen schweren Gegenständen um diese demselben Metalldetektor 2 zuzuführen.

Obwohl die Erfindung durch die Darstellung mehrerer spezifischen Ausführungsbeispiele beschrieben worden ist, ist es offensichtlich, dass zahlreiche weitere Ausführungsvarianten in Kenntnis der vorliegenden Erfindung geschaffen werden können, beispielsweise indem die Merkmale der einzelnen Ausführungsbeispiele miteinander kombiniert und/oder einzelne Funktionseinheiten der Ausführungsbeispiele ausgetauscht werden.

### Bezugszeichenliste

- 1: Wäge- / Metalldetektionssystem
- 2: Metalldetektor
- 3: Auflagestellen
- 3A: Auflagestellen des Metalldetektors
- 3B: Auflagestellen der Transporteinrichtung
- 4, 504, 604, 704A, 704B, 704C 804A,:
- 804B, 904A, 904B, 904C, 1004: Tragrahmen
- 5: Bedienungseinheit
- 6: Wägezellen
- 7, 1007: Transporteinrichtung
- 8: Öffnung des Metalldetektors
- 9, 1009: Transporteinrichtungskörper
- 10, 1010: Band
- 11: Querverbindung
- MFZ: Metallfreie Zone

## Patentansprüche

1. Kombiniertes Wäge- / Metalldetektionssystem (1), aufweisend mindestens einen Tragrahmen (4, 504, 604, 704A. 704B, 704C, 804A, 804B, 904A, 904B, 1004) zur Abstützung des kombinierten Wäge- / Metalldetektionssystem (1) auf dem Untergrund, mindestens zwei an Auflagestellen (3A, 3B) des mindestens einen Tragrahmens (4, 504, 604, 704B, 704C, 804B, 904B, 904C, 1004) angeordnete den Wägewert bildende Wägezellen (6), mit für ein für den Betrieb aufgestelltes kombiniertes Wäge- / Metalldetektionssystem (1) mindestens einer auf den Wägezellen (6) aufliegenden Transporteinrichtung (7, 1007), ferner aufweisend einen Metalldetektor (2), mit einer Öffnung (8), wobei die Transporteinrichtung (7) durch die Öffnung des Metalldetektors (2) hindurch geführt ist
**dadurch gekennzeichnet,**
**dass** die mindestens zwei Wägezellen (6) in Bezug auf die Beförderungsrichtung der Transporteinrichtung (7) auf jeweils verschiedenen Seiten des Metalldetektors (2) angeordnet sind, vorzugsweise nahe dem in Beförderungsrichtung und dem entgegen der Beförderungsrichtung weisenden Ende der Transporteinrichtung (7),
**dass** der Metalldetektor (2) auf von den Auflagestellen (3B) der Wägezellen (6) verschiedenen Auflagestellen (3A) des mindestens einen Tragrahmens (4, 504, 604, 704A, 804A, 904A, 1004) abgestützt ist, so dass die Wägezellen (6) frei von der Vorlast des Metalldetektors (2) sind und das Verwiegen und das Erkennen von metallischen Verunreinigung eines Gegenstandes auf derselben mindestens einen Transporteinrichtung (7, 1007) zeitnah erfolgen kann.

2. Kombiniertes Wäge- / Metalldetektionssystem (1) nach Anspruch 1, **dadurch gekennzeichnet, dass** Metalldetektor (2) und Transporteinrichtung (7) über voneinander getrennt platzierten Auflagestellen (3A, 3B) auf ein und demselben Tragrahmen (4, 504, 604, 1004) abgestützt sind.

3. Kombiniertes Wäge- / Metalldetektionssystem (1) nach Anspruch 2, **dadurch gekennzeichnet, dass** der Tragrahmen (4, 504, 604, 1004) Auflagestellen (3A), die für die Befestigung eines Metalldetektors (2) bestimmt sind, aufweist, und mindestens zwei Auflagestellen (3B), die für die Befestigung von Wägezellen (6) bestimmt sind, aufweist wobei auf den Wägezellen die Transporteinrichtung (7) abgestützt werden kann.

4. Kombiniertes Wäge- / Metalldetektionssystem (1) nach Anspruch 1, **dadurch gekennzeichnet, dass** der Metalldetektor (2) über Auflagestellen (3A) auf einem ersten Tragrahmen (704A, 804A, 904A), und die Transporteinrichtung (7) über jeweils mindestens zwei Auflagestellen (3B) auf einem, vom ersten Tragrahmen (704A, 804A, 904A) getrennten zweiten Tragrahmen (704B, 704C, 804B, 904B, 904C) abgestützt ist.

5. Kombiniertes Wäge- / Metalldetektionssystem (1) nach Anspruch 4, **dadurch gekennzeichnet, dass** der zweite Tragrahmen (704B, 704C, 804B, 904B, 904C) aus einem ersten Teiltragrahmen (704B, 904B) und einem zweiten Teiltragrahmen(704C, 904C) besteht, wobei beide Teiltragrahmen (704B, 704C, 804B, 904B) je mindestens eine Auflagestelle (3B) für eine Wägezelle (6) aufweisen.

6. Kombiniertes Wäge- / Metalldetektionssystem (1) nach einem der Ansprüche 1, 4 oder 5, **dadurch gekennzeichnet, dass** der Metalldetektor (2) auf einem ersten Tragrahmen (904A) abgestützt ist und der zweite Tragrahmen (904B, 904C) zur Abstützung des Transportsystems (7, 1007) am Gehäuse des Metalldetektors (2) angeordnet ist.

7. Kombiniertes Wäge- / Metalldetektionssystem (1) nach Anspruch 5 oder Anspruch 6 unter Rückbezug auf Anspruch 5, **dadurch gekennzeichnet, dass** der erste Teiltragrahmen (704B, 904B) und der zweite Teiltragrahmen (704C, 904C) durch eine Querverbindung (11) miteinander verbunden sind.

8. Kombiniertes Wäge- / Metalldetektionssystem (1) nach einem der Ansprüche 1 bis 7, **dadurch gekennzeichnet, dass** mehrere Transporteinrichtungen (1007) parallel zueinander durch den Metalldetektor hindurch verlaufen.

9. Kombiniertes Wäge- / Metalldetektionssystem (1) nach Anspruch 8, **dadurch gekennzeichnet, dass** jede Transporteinrichtung (1007) auf mindestens zwei Wägezellen abgestützt ist, so dass eine Wägung auf jeder Transporteinrichtung (1007) separat erfolgen kann.

10. Kombiniertes Wäge- / Metalldetektionssystem (1) nach einem der Ansprüche 1 bis 8, **dadurch gekennzeichnet, dass** die mindestens eine Transporteinrichtung (7, 1007) vermittels einer Dreipunktauflage auf drei Wägezellen (6) aufliegt.

11. Kombiniertes Wäge- / Metalldetektionssystem (1) nach einem der Ansprüche 1 bis 8, **dadurch gekennzeichnet, dass** die mindestens eine Transporteinrichtung (7, 1007) auf vier an jeder Ecke der Transporteinrichtung (7, 1007) angeordneten Wägezellen (6) aufliegt.

12. Kombiniertes Wäge- / Metalldetektionssystem (1) nach einem der Ansprüche 1 bis 11, **dadurch gekennzeichnet, dass** der Metalldetektor (2) mittig zur Transporteinrichtung (7) in Bezug auf die Beförderungsrichtung angeordnet ist.

13. Kombiniertes Wäge- / Metalldetektionssystem (1) nach einem der Ansprüche 1 bis 11, **dadurch gekennzeichnet, dass** ein der Wägung und Metalldetektion nachfolgendes Ausschleussystem dafür ausgebildet ist, diejenigen Gegenstände auszuschleusen, welche nicht den Vorgabekriterien betreffend Gewichtstoleranzen oder Metallverunreinigungsgehalt entsprechen.

14. Kombiniertes Wäge- / Metalldetektionssystem (1) nach einem der Ansprüche 1 bis 13, **dadurch gekennzeichnet, dass** die Transporteinrichtung mindestens einen Transporteinrichtungskörper (9) und ein diesen Transporteinrichtungskörper (9) umspannendes Band (10) zur Beförderung von Gegenständen aufweist.

15. Kombiniertes Wäge- / Metalldetektionssystem (1) nach einem der Ansprüche 1 bis 14, **dadurch gekennzeichnet, dass** die Transporteinrichtung (7) im unteren Bereich nahe den Ecken der Öffnung (8) durch den Metalldetektor (2) hindurch geführt ist.
